(19) Europäisches Patentamt
European Patent Office
Office européen des brevets

(11) Publication number : 0 461 320 B1

(12) # EUROPEAN PATENT SPECIFICATION

(45) Date of publication of patent specification : 09.03.94 Bulletin 94/10

(51) Int. Cl.$^5$ : C09D 4/00

(21) Application number : 90314064.8

(22) Date of filing : 20.12.90

(54) **In mold coating compositions.**

(30) Priority : 13.06.90 US 537852

(43) Date of publication of application : 18.12.91 Bulletin 91/51

(45) Publication of the grant of the patent : 09.03.94 Bulletin 94/10

(84) Designated Contracting States : BE CH DE ES FR GB IT LI LU NL SE

(56) References cited :
EP-A- 0 049 940
EP-A- 0 130 686
EP-A- 0 136 074
EP-A- 0 297 696
DE-A- 3 406 321

(73) Proprietor : GENCORP INC.
175 Ghent Road
Fairlawn, Ohio 44333-3300 (US)

(72) Inventor : Cobbledick, David S.
717 Beryl Drive
Kent, Ohio 44240 (US)
Inventor : Mong, Frederick M.
3072 Markle Drive
Silver Lake, Ohio 44224 (US)
Inventor : Schreiner, Bruce A.
1562 Saxe Road
Mogadore, Ohio 44260 (US)
Inventor : Spencer, Robert L.
1415 Croyden Road
Lyndhurst, Ohio 44124 (US)

(74) Representative : Stoner, Gerard Patrick et al
Mewburn Ellis 2 Cursitor Street
London EC4A 1BQ (GB)

EP 0 461 320 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a thermosetting in-mold compositions, particularly to such compositions for coating fiber reinforced plastic (FRP) parts.

The surfaces of fiberglass-reinforced plastic exterior panels for automotive applications requiring Class A surfaces must be sufficiently conductive to enable the smooth and even application of paint and/or primer by electrostatic spray-painting techniques. When the surfaces are insufficiently conductive, paint voids and unevenness of the paint surface occurs when electrostatic spray techniques are employed.

Early on in the development of in-mold coatings to eliminate surface porosity associated with plastic sheet molding compounds (SMC) used to manufacture automotive exterior body panels, there were obvious advantages to having the in-mold coating provide the conductivity. For the most part, conductivity in the in-mold coating was achieved via the addition of conductive carbon black. Although this technique was effective, it had a major problem.

The problem was that the level of conductivity was limited by the amount of conductive carbon black which could be tolerated. As the level of carbon black was increased to obtain higher levels of conductivity required, the viscosity of the in-mold coating increased substantially - the in-mold coating became more and more difficult to handle, mix and process as the viscosity increased.

A high level of conductivity is required to assure adequate adhesion in the electrostatic painting of vertical part walls where the coating thickness approaches 15 μm (or 0.5 mill. Conversely, the conductivity of the in-mold coating varies directly with coating thickness. Also, higher levels of coating reduced the likelihood of good conductivity across the surface of a part due to poor coating preparation or coating thickness variations stemming from long coating flow outs on large, flat parts.

In view of the above, it would be desirable to avoid such difficulties and to provide a composition and process for in-mold coating TRP parts with a one-component coating composition exhibiting increased conductivity for electrostatic spray painting.

We have found that by addition of ammonium arylsulphonates to the composition, it is possible to enhance electrical conductivity without a disadvantageously large concomitant increase in viscosity.

Aspects are set out in the claims.

In a particular aspect, an FRP molding can be in-mold coated using a composition comprising

(a) 100 parts by weight of at least one polymerizable epoxy based oligomer having at least two acrylate groups and a weight average molecular weight of from 500 to 1,500,

(b) an ethylenically-unsaturated monomer to copolymerise with and cross link component (a);

(c) from 20 to 50 parts by weight of at least one copolymerizable monoethylenically unsaturated compound differing from component (b) in having a -CO- group and a $-NH_2$, -NH- and/or -OH group,

(d) polyvinyl acetate, to improve adhesion of the coating;

(e) from 0.2 to 5 parts by weight of at least one zinc salt of a fatty acid having at least 10 carbon atoms,

(f) from 0.01 to 1.0 part by weight of at least one accelerator for a peroxide initiator,

(g) from 5 to 15 parts by weight of conductive carbon black,

(h) from 50 to 155 parts by weight of a filler, different from component (g);

(i) from 0.2 to 5 parts by weight of at least one calcium salt of a fatty acid having at least 10 carbon atoms and

(j) containing from 0.1 to 1.5 parts by weight of a soluble ionic organic salt to improve the overall conductivity of the in-mold coating for electrostatic painting, relative to the coating composition viscosity. The nature of suitable salts is further explained below.

An organic free radical peroxide initiator may be used, in an amount of up to 5%, preferably up to 2% by weight based on the weight of the polymerizable ethylenically unsaturated materials.

The composition flows well and is stable for about a week even when containing the peroxide. It can be molded in a short period of time. The resulting thermoset coating exhibits good adhesion to different FRP substrates and will accept many paint finishes obviating the need for a primer.

Also, the composition provides on curing an in-mold coating which can be spray painted electrostatically to provide an even paint coating or film. The coating may furthermore eliminate the intermediate step of priming the in-mold coating with a conductive primer before electrostatic painting.

### DISCUSSION OF DETAILS

(a) A polymerizable epoxy based oligomer having at least two acrylate (or methacrylate or ethacrylate) groups is prepared by reacting acrylic acid, methacrylic acid or ethacrylic acid and so forth with an epoxy based oligomer or resin such as a Bisphenol A epoxy, a tetrabromo Bisphenol A epoxy, phenolic novolak

epoxy, tetraphenylolethane epoxy, dicycloaliphatic epoxy and so forth. Mixtures of these epoxy based oligomers may be used. Of these materials, it is preferred to use a non-volatile diacrylate ester of a liquid Bisphenol A epoxy resin. They have weight average molecular weights of from 500 to 1,500. These materials are well known.

(b) A copolymerizable ethylenically unsaturated monomer is used to copolymerize with and to crosslink the polymerizable oligomers and may be e.g. styrene (preferred), alpha methyl styrene, vinyl toluene, t-butyl styrene, chlorostyrene, methyl methacrylate, diallyl phthalate (with styrene or methyl methacrylate and the like), triallyl cyanurate, triallyl isocyanurate, divinyl benzene, methyl acrylate and so forth, or mixtures thereof.

(c) For further copolymerization and crosslinking and to improve hardness of the resulting coating, there is normally also used in the composition a monoethylenically unsaturated compound having a

$$-\overset{O}{\overset{\|}{C}}-$$

group and having a $-NH_2$, -NH- and/or -OH group. Examples of such monomeric compounds are hydroxyl propyl methacrylate (preferred), hydroxyethyl methacrylate, hydroxy ethyl acrylate, hydroxy ethyl crotonate, hydroxypropyl acrylate. hydroxy polyoxypropylene acrylate, hydroxy polyoxypropylene methacrylate, hydroxy polyoxyethylene methacrylate, acrylamide, methacrylamide, N-hydroxymethyl acrylamide. N-hydroxymethyl methacrylamide and so forth and mixtures of the same.

(d) Polyvinyl acetate is useful in the in-mold composition to improve paint adhesion of the in-mold coating to the substrate. It may also act as a low profile resin. The carboxylated polyvinyl acetate has an acid number of from about 1.5 to 4.

(e) A zinc salt of a fatty acid having at least 10 carbon atoms is usually employed in the in-mold coating composition. It appears to function as a mold release agent and as a secondary accelerator for the cure. Fatty acids are well known. Mixtures of zinc salts of the fatty acids can be used. Examples of some zinc salts are zinc palmitate, zinc stearate, zinc ricinoleate and the like. It is preferred to use the zinc salt of a saturated fatty acid such as zinc stearate.

(f) An accelerator is used for the peroxide initiator may be a material such as a drier, e.g., cobalt octoate (preferred). The materials which may be used are zinc naphthenate, lead naphthenate, cobalt naphthenate and manganese naphthenate. Soluble Co, Mn and Pb salts of linoleic acid, also, may be used. Mixtures of accelerators may be used.

(g) Conductive carbon black is used in the in-mold coating composition.

(h) A filler is used in the in-mold coating composition. Examples of fillers are clay, MgO, $Mg(OH)_2$, $CaCO_3$, silica, calcium silicate, mica, aluminum hydroxide, barium sulfate, talc, hydrated silica, magnesium carbonate and mixtures of the same. The fillers should be finely divided. Of these fillers, it is preferred to use talc. Fillers can afford the desired viscosity and flow to the in-mold composition for molding and contribute to the desired physical properties in the resulting thermoset in-mold coating. Fillers, also, may improve adhesion. However, care should be exercised in the use of high filler contents as this may give high viscosities and result in flow and handling difficulties.

(i) A calcium salt of a fatty acid having at least 10 carbon atoms is useful in the in-mold coating composition as a mold release agent and to control the rate of the cure. Fatty acids are well known. Mixtures of calcium salts of the fatty acids can be used. Examples of some calcium salts are calcium stearate, calcium palmitate, calcium oleate and the like. It is preferred to use the calcium salt of a saturated fatty acid like calcium stearate.

An organic-free radical or free radical generating initiator (catalyst) such as a peroxide is used to catalyze the polymerization, copolymerization and/or crosslinking of the ethylenically unsaturated oligomers and the other ethylenically unsaturated materials. Examples of free-radical initiators include tertiary butyl perbenzoate (preferred), tertiary butyl peroctoate in diallyl phthalate, diacetyl peroxide in dimethyl phthalate, diacetyl peroxide in dimethyl phthalate, dibenzoyl peroxide, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3, 4-dimethyl-1, 2-dioxacyclopentane, t-butyl-peroxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2, 5-bis(t-butyl peroxy) hexane, cumyl hydroperoxide, diacetyl peroxide, t-butyl hydroperoxide, ditertiary butyl peroxide, 3,5-dihydroxy-3, 5-dimethyl-1, 2-oxacyclopentane and 1,1-bis(t-butyl peroxy)-3, 3,5-trimethyl cyclohexane and the like and mixtures thereof. It is sometimes desirable to use mixtures of initiators to take advantage

of their different decomposition rates and times at different temperatures and so forth. The peroxide initiator should be used in an amount sufficient to overcome the effect of any inhibitor and to cause crosslinking or curing of the ethylenically unsaturated materials. In general the peroxide initiator is used in an amount of up to about 5%, preferably up to about 2%, by weight based on the weight of the ethylenically unsaturated materials employed in the in-mold coating composition.

The unsaturated materials mentioned above, thus, are used in an amount sufficient to provide on cure (e.g., polymerization, copolymerization and/or crosslinking) a thermoset composition.

To prevent premature gelation of the ethylenically unsaturated materials and to provide for improved shelf-life or storageability, inhibitors are added in the desired amount to the composition or are provided in the raw materials before use. Examples of inhibitors are hydroquinone, benzoquinone, p-t-butyl catechol and the like, and mixtures thereof. Their use is conventional.

(j) The soluble ionic organic salt, which is added to the in-mold composition to improve conductivity without increasing viscosity, is an ammonium arylsulphonate. In particular, it preferably has the following general formula:

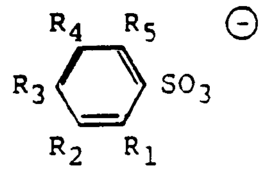 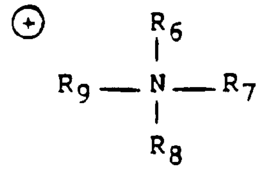

where $R_1$ through $R_5$ are selected from

hydrogen atoms, methyl, ethyl and propyl radicals,(methyl being preferred) and where $R_6$ through $R_9$ are hydrogen atoms or alkyl radicals of from 1 to 8 carbon atoms which may be the same or different and where it is preferred that all of the $R_6$ through $R_9$ radicals be hydrogen atoms or methyl or ethyl radicals. Examples of such compounds are tetra ethyl ammonium p-toluene sulfonate and tetra methyl ammonium p-toluene sulfonate.

The in-mold composition additionally optionally may be compounded with other mold release agents, antidegradants, U-V absorbers, paraffin wax, solid glass or resin micro-spheres, thickening agents, other low shrink additives and the like. These compounding ingredients should be used in amounts sufficient to provide satisfactory results. It is not desirable to use in the in-mold composition of this invention materials like butadiene-styrene block copolymers or fatty alcohol phosphates.

For ease in handling, materials like polyvinylacetate may be dissolved in a reactive monomer like styrene. The viscosity of the oligomers may be reduced by dilution with styrene and the like. The ingredients of the inmold composition should be readily mixed and handle at ambient or room temperature or temperatures below the polymerization temperature so that they may be readily pumped to the mold and injected into the same. The ingredients may be warmed or heated before or during mixing and mixed in steps to facilitate thorough mixing, dispersion and solution of the same. Also, the bulk of the ingredients can be thoroughly mixed and the remainder including the catalyst separately mixed and then both can be pumped to a mixing head to be mixed together and then injected into the mold.

With a peroxide initiator or catalyst the in-mold composition may have a shelf-life at room temperature (about 25°C) of about a week and, without the initiator, it may have a shelf-life of several months at room temperature. The initiator is preferably added to the composition and thoroughly mixed therewith just before molding.

All of the ingredients of the in-mold coating composition should be kept dry or have a minimal amount of moisture or the water content should be controlled to obtain reproducible results and to prevent pore formation.

Mixing of the ingredients of the in-mold composition should be thorough. Injection or compression, transfer molding or other molding apparatus or machines can be used for the in-mold coating. The in-mold coating composition can be applied to the substrate and cured at from about 140°C to 155°C(about 290° to 310°F) and at about 7000 kPa (about 1,000 psi) for from about 0.5 to 3 minutes.

The processes and products embodying the invention may be used in the manufacture of automobile and truck parts such as grille and headlamp assemblies, deck hoods, fenders, door panels and roofs as well as in the manufacture of food trays, appliance and electrical components, furniture, machine covers and guards, bathroom components, structural panels and so forth. The thermoset fiber reinforced plastic (FRP) such as the polyester resin or vinyl ester resin plus styrene and glass fiber composition substrate to which the in-mold composition is applied can be a sheet molding compound (SMC) or a bulk molding compound (BMC) or other thermosetting FRP material as well as a high strength molding compound (HMC) or a thick molding compound.

The FRP substrate can have from 10 to 75% by weight of glass fibers. The SMC compound usually contains from 25 to 30% by weight of glass fibers while the HMC compound may contain from 55 to 60% by weight of glass fibers. The glass fiber reinforced thermoset plastic (FRP) substrate can be rigid or semirigid (may contain a flexibilizing moiety such as a adipate group in the polyester).

Compositions embodying the invention exhibit good pumpability and flow in the mold. They can give rapid cures as low as 50 to 90 s at 150°C (300°F).They, also, show good adhesion to paints and can be used not only as an in-mold coating to cover blemishes but as a good conductive coating for electrostatic painting and as a primer for most paint finish systems such as soluble acrylic lacquers, acrylic dispersion lacquers, water borne acrylic enamels, high solids solution acrylic enamels, acrylic non-aqueous dispersions and urethanes.

The following examples will serve to illustrate the present invention with more particularity to those skilled in the art. In the examples, the parts are parts by weight unless otherwise indicated.

In the Examples, Example 1 shows gel times, and conductivities over a range of coating thicknesses on FRP, of a variety of prior art-type compositions in which various commercially available bisphenol A epoxy resin diacrylate esters are used in combination with a basic "master batch" containing low profile resin, hydroxypropylmethacrylate and carbon black as well as the other additives.

In Example 2, the same diacrylate ester as used in Run A of Example 1 is used in all of Runs A to D, while ionic organic additives are varied from Run to Run.

In Example 3, in each of Runs A and B an ionic organic additive is used and is a quaternary ammonium p-toluene sulphonate.

## Example 1

| MATERIAL | RUNS — AMOUNTS IN PARTS BY WEIGHT | | | | | | |
|---|---|---|---|---|---|---|---|
| | A | B | C | D | E | F | G |
| Master Batch | 117.85————————————————→ | | | | | | |
| Novacure 3700-15S* (Lot 39080) | 117.65 | | | | | | |
| Ebecryl 3705-15S* (Lot 1249132) | | 117.65 | | | | | |
| Ebecryl 3705-15S* (Lot 1249167) | | | 117.65 | | | | |
| Ebecryl 3705-15S* (Lot 1259009) | | | | 117.65 | | | |
| Radcure RSX-88190* (Lot #2) | | | | | 117.65 | | |
| Radcure RSX-88190* (Lot #3) | | | | | | 117.65 | |
| Cargill Resin 1570 (No styrene) (Cargill Corp.) | | | | | | | 100 |
| Styrene | | | | | | | 17.65 |
| **1. Mix well** | | | | | | | |
| Talc | 80————————————————→ | | | | | | |
| **2. Blend** | | | | | | | |
| Gel Time 93.3°C(200°F) | 7.8/341 | | 8.1/348 | | 7.3/351 | | - |
| (1.5 pts. tertiary butyl perbenzoate/100) | | 6.3/354 | | 6.7/351 | | 7.2/367 | - |

(gel times measured in test tube at bath temperature of 93°C (200°F). Entries given as gel times in minutes/peak exotherm temp in °C(°F)).

## Example 1 (continued)

| MATERIAL | | RUNS AMOUNTS IN PARTS BY WEIGHT | | | | | | |
|---|---|---|---|---|---|---|---|---|
| | | A | B | C | D | E | F | G |
| Brookfield Viscosity 30°(86°F), #7 Spindle at 100 rpms, CPS | | 7600 | 7400 | 7200 | 7600 | 7400 | 7400 | |
| Molded and cured on FRP substrate: | | | | | | | | |
| Conductivity (Units on Ransberg meter reading 165+, best conductivity) | Thickness | | | | | | | |
| | 45µm(1.5)mils | 165 | 165 | 160 | 165 | 146 | 160 | xx |
| | 30µm(1.0)mils | 155 | 155 | 150 | 155 | 150 | 155 | xx |
| | 15µm(0.5)mils | 150 | 150 | 145 | 150 | 145 | 155 | xx |
| | 6µm(0.2)mils | - | - | - | - | - | - | - |

* Essentially a non-volatile diacrylate ester of a liquid Bisphenol A epoxy resin. The resin contains a minor amount of styrene as a carrier (17.5 parts styrene per 100 of the resin).

** Ran clear off meter, 165+ Pegs.

**NOTE TO EXAMPLE 1**

Novacure and Ebecryl and Radcure Resins are made by Radcure, Louisville, Kentucky.

Runs A to F showed erratic conductivity Ransberg meter reading on 0.2 to 1.5 mils coatings.

**Example 1 (continued)**

Master Batch

| Material | Parts by Weight |
|---|---|
| Low profile resin (polyvinyl acetate resin, 40% in styrene, BAKELITE LP-90, Union Carbide Corp.) | 25.0 |
| Hydroxy propyl methacrylate | 30.0 |
| Styrene | 45.35 |
| 2% benzoquinone in styrene | 7.0 |
| 1. **Mix well** | |
| Zinc stearate | 1.55 |
| Calcium Stearate | 0.30 |
| Cobalt octoate (12% as Co in mineral oil) | 0.15 |
| 2. **Mix well** | |
| Conductive carbon black (VULCAN, furnace, Cabot Corp.) | 8.5 |
| 3. **Blend** | |

**Example 2**

| | Runs (Parts by Weight) | | | |
|---|---|---|---|---|
| Material | A | B | C | D |
| Hydroxy propyl methacrylate | 30.0 | 30.0 | 30.0 | 30.0 |
| Acetic acid, potassium salt | 0.7 | | | |
| Tetramethyl ammonium chloride | | | 0.7 | |
| Tetra ethyl ammonium p-toluene sulfonate | | | | 0.7 |
| 1. **Mix well or until uniformly dispersed.** | | | | |
| Low profile resin (See Example 1) | 25.0 | 25.0 | 25.0 | 25.0 |
| Styrene | 45.35 | 45.35 | 45.35 | 45.35 |

**Example 2 (continued)**

| Material | Runs (Parts by Weight) A | B | C | D |
|---|---|---|---|---|
| 2% Benzoquionone in styrene | 7.0 | 7.0 | 7.0 | 7.0 |
| **2. Mix well** | | | | |
| Zinc stearage | 1.85 | 1.85 | 1.85 | 1.85 |
| Calcium stearate | .45 | .45 | .45 | .45 |
| Cobalt octoate (12% as Co in mineral oil) | 0.15 | 0.15 | 0.15 | 0.15 |
| **3. Mix well** | | | | |
| Conductive carbon black (See Example 1) | 8.5 | 8.5 | 8.5 | 8.5 |
| **4. Mix well** | | | | |
| Novacure 3700-15S* (Lot 39081) | 117.65 | 117.65 | 117.65 | 117.65 |
| **5. Mix well** | | | | |
| Talc | 80 | 80 | 80 | 80 |
| **6. Disperse** | | | | |
| Gel Time 182.2°C(200°F) (1.5 pts tert. butyl perbenzoate/100) molded and cured on FRP) | 25+ min | 6.0/200°C (393°F) | 25+min | 5.4/189.4°C (373°F) |

| Conductivity | Thickness | A | B | C | D |
|---|---|---|---|---|---|
| (Units on | 60µm(2.0 mils) | Pegs(slow) | Pegs(slow) | Pegs | ** |
| Ransberg | 45µm(1.5 mils) | 165 | 165 | Pegs(slow) | ** |
| meter | 30µm(1.0 mils) | 160 | 160 | 165 | ** |
| reading | 15µm(0.5 mils) | 150 | 145 | 155 | ** |
| 165+, best conductivity) | | | | | |

** (See Example 1)

## Example 3

| Material | Run Parts by Weight A | Run Parts by Weight B |
|---|---|---|
| Hydroxy propyl methacrylate | 30.0 | 30.0 |
| Tetra ethyl ammonium p-toluene sulfonate (readily soluble) | 0.5 | |
| Tetra methyl ammonium p-toluene sulfonate (partially soluble) | | 0.5 |
| **1. Add until dissolved** | | |
| Low profile resin (See Example 1) | 25.0 | 25.0 |
| Styrene | 45.35 | 45.35 |
| 2% Benzoquinone in styrene | 7.0 | 7.0 |
| **2. Mix well** | | |
| Zinc stearate | 1.85 | 1.85 |
| Calcium stearate | 0.45 | 0.45 |
| Cobalt octoate (12% as Co in mineral oil) | 0.15 | 0.15 |
| **3. Mix well** | | |
| Conductive carbon black (See Example 1) | 8.5 | 8.5 |
| **4. Blend** | | |
| Ebecryl 3700-15S(Lot 12-49432) | 117.65 | 117.65 |
| **5. Mix well** | | |
| Talc | 80.0 | 80.0 |
| **6. Blend** | | |
| Gel time 93.3°C(200°F)(1.5 pts. tertiary butyl perbenzoate/100) molded and cured on FRP substrate | 5.1/163.3°C (326°F) | 5.2/195.6°C (384°F) |

Example 3 (continued)

| Conductivity | Thickness | Run A Ransberg | Run B Ransberg |
|---|---|---|---|
| (Units on | 60µm(2.0 mils) | xx | xx |
| Ransberg | 45µm(1.5 mils) | xx | xx |
| meter | 30µm(1.0 mils) | xx | xx |
| reading | 15µm(0.5 mils) | xx slow | xx slow |
| 165+, best | | | |
| conductivity) | | | |

** (See Example 1)

From these Examples, it is seen that the best conductivities are shown by the Runs in which the tetraalkyl ammonium p-toluene sulphonate additives were used.

## Claims

### Claims for the following Contracting States : BE, CH, DE, FR, GB, IT, LI, LU, NL, SE

1. A composition for making a thermosetting coating, comprising
   (a) 100 parts by weight of least one polymerizable epoxy based oligomer having at least two acrylate groups and a weight average molecular weight of from 500 to 1,500,
   (b) an ethylenically-unsaturated monomer to copolymerise with and crosslink component (a);
   (c) from 20 to 50 parts by weight of at least one copolymerizable monoethylenically unsaturated compound differing from component (b) in having a -CO- group and a $-NH_2$, -NH- and/or -OH group,
   (d) polyvinyl acetate, to improve adhesion of the coating;
   (e) from 0.2 to 5 parts by weight of at least one zinc salt of a fatty acid having at least 10 carbon atoms,
   (f) from 0.01 to 1.0 part by weight of at least one accelerator for a peroxide initiator,
   (g) from 5 to 15 parts by weight of conductive carbon black,
   (h) from 50 to 155 parts by weight of a filler, different from component (g);
   (i) from 0.2 to 5 parts by weight of at least one calcium salt of a fatty acid having at least 10 carbon atoms and
   (j) as an additive from 0.1 to 1.5 parts by weight of a soluble ionic organic salt which has the general formula:

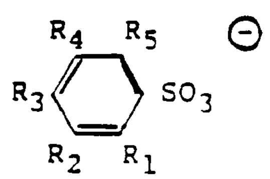 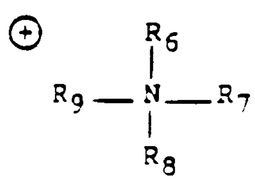

   where $R_1$ through $R_5$ are selected from
   hydrogen atoms. methyl, ethyl and propyl radicals, methyl being preferred, and where $R_5$ through $R_9$ are hydrogen atoms or alkyl radicals of from 1 to 8 carbon atoms which may be the same or different and where it is preferred that all of the $R_5$ through $R_9$ radicals be hydrogen atoms or methyl or ethyl radicals.

2. A composition according to claim 1 additionally containing at least one organic free radical peroxide initiator in an amount of up to about 5% by weight based on the weight of the polymerizable ethylenically unsaturated materials.

3. A composition according to claim 1 or claim 2 wherein (h) comprises talc.

4. A composition according to any of claims 1 to 3 in which
(a) is a diacrylate ester of a liquid Bisphenol A epoxy resin,
(b) is styrene,
(c) is hydroxypropyl methacrylate,
(e) is zinc stearate'
(f) is cobalt octoate, and
(i) is calcium stearate.

5. An in-mould coating composition curable to a thermosetting electrically-conductive coating and comprising
an epoxy-based acrylate oligomer component;
an ethylenically-unsaturated monomer component for cross-linking the oligomer component under free-radical initiation;
polyvinyl acetate;
a filler, and
conductive carbon black
characterised in that it contains a soluble ionic organic salt which is an ammonium arylsulphonate effective to increase the conductivity in the coating relative to that conferred by the conductive carbon black.

6. A composition according to any one of claims 1 to 5 in which the organic salt is a tetra-alkyl ammonium p-toluene sulphonate.

7. A composition according to claim 6 in which the organic salt is tetraethyl or tetramethyl ammonium p-toluene sulphonate.

8. A method which comprises in-mould coating a moulded thermoset polyester resin or a thermoset vinyl ester resin composition containing from 10 to 75% by weight of glass fibers with a thermosetting in-mould coating composition curing under pressure, at a temperature and for a period of time sufficient to cause said in-mould coating composition to form an adherent thermoset coating on said composition, said in-mould coating composition being in accordance with any one of claims 1 to 7 and comprising free-radical initiator.

9. A method according to claim 8, further comprising electrostatically spray-painting the coated resin composition.

10. A laminate comprising an adherent coating in-mould coated onto a moulded thermoset polyester resin or thermoset vinyl ester resin composition containing from about 10 to 75% by weight of glass fibers, said in-mould coating comprising the reaction product of a composition according to any one of claims 1 to 7.

**Claims for the following Contracting State : ES**

1. A process for making a composition for a thermosetting coating, comprising mixing
(a) 100 parts by weight of at least one polymerizable epoxy based oligomer having at least two acrylate groups and a weight average molecular weight of from 500 to 1,500,
(b) an ethylenically unsaturated monomer to copolymerise with an crosslink component (a) ;
(c) from 20 to 50 parts by weight of at least one copolymerizable monoethylenically unsaturated compound differing from component (b) in having a -CO- group and a $-NH_2$, -NH- and/or -OH group,
(d) polyvinyl acetate to improve adhesion of the coating ;
(e) from 0.2 to 5 parts by weight of at least one zinc salt of a fatty acid having at least 10 carbon atoms,
(f) from 0.01 to 1.0 part by weight of at least one accelerator for a peroxide initiator,
(g) from 5 to 15 parts by weight of conductive carbon black,
(h) from 5 to 155 parts by weight of a filler different from component (g) ;

(i) from 0.2 to 5 parts by weight of at least one calcium salt of a fatty acid having at least 10 carbon atoms and
(j) as an additive from 0.1 to 1.5 parts by weight of a soluble ionic organic salt which has the general formula:

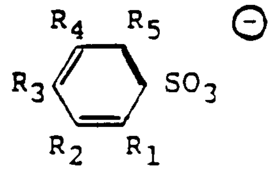

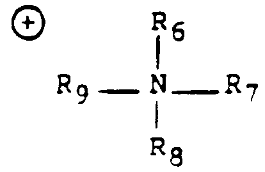

where $R_1$ through $R_5$ are selected from
hydrogen atoms. methyl, ethyl and propyl radicals, methyl being preferred,and where $R_5$ through $R_9$ are hydrogen atoms or alkyl radicals of from 1 to 8 carbon atoms which may be the same or different and where it is preferred that all of the $R_5$ through $R_9$ radicals be hydrogen atoms or methyl or ethyl radicals.

2. A process according to claim 1 additionally comprising incorporating at least one organic free radical peroxide initiator in an amount of up to about 5% by weight based on the weight of the polymerizable ethylenically unsaturated materials.

3. A process according to claim 1 or claim 2 wherein (h) comprises talc.

4. A process according to any of claims 1 to 3 in which
(a) is a diacrylate ester of a liquid Bisphenol A epoxy resin,
(b) is styrene,
(c) is hydroxypropyl methacrylate,
(e) is zinc stearate'
(f) is cobalt octoate, and
(i) is calcium stearate.

5. A process for making an in-mould coating composition curable to a thermosetting electrically-conductive coating, comprising mixing
an epoxy-based acrylate oligomer component;
an ethylenically-unsaturated monomer component for cross-linking the oligomer component under free-radical initiation;
polyvinyl acetate;
a filler, and
conductive carbon black
characterised by incorporating a soluble ionic organic salt which is an ammonium arylsulphonate effective to increase the conductivity in the coating relative to that conferred by the conductive carbon black.

6. A process according to any one of claims 1 to 5 in which the organic salt is a tetra-alkyl ammonium p-toluene sulphonate.

7. A process according to claim 6 in which the organic salt is tetraethyl or tetramethyl ammonium p-toluene sulphonate.

8. A method which comprises in-mould coating a moulded thermoset polyester resin or a thermoset vinyl ester resin composition containing from 10 to 75% by weight of glass fibers with a thermosetting in-mould coating composition curing under pressure, at a temperature and for a period of time sufficient to cause said in-mould coating composition to form an adherent thermoset coating on said composition, said in-mould coating composition being obtainable in accordance with any one of claims 1 to 7 and comprising free-radical initiator.

9. A method according to claim 8, further comprising electrostatically spray-painting the coated resin composition.

10. A laminate comprising an adherent coating in-mould coated onto a moulded thermoset polyester resin or thermoset vinyl ester resin composition containing from 10 to 75% by weight of glass fibers, said in-mould coating comprising the reaction product of a composition obtainable according to any one of claims 1 to 7.

## Patentansprüche

### Patentansprüche für folgende Vertragsstaaten : BE, CH, DE, FR, GB, IT, LI, LU, NL, SE

1. Zusammensetzung zur Herstellung einer wärmehärtenden Beschichtung, umfassend:
   (a) 100 Gewichtsteile zumindest eines polymerisierbaren Oligomers auf Epoxybasis mit zumindest zwei Acrylatgruppen und einem durchschnittlichen Molekulargewicht von 500 bis 1.500,
   (b) ein äthylenisch ungesättigtes Monomer zum Copolymerisieren mit und Vernetzen von Bestandteil (a);
   (c) 20 bis 50 Gewichtsteile zumindest einer copolymerisierbaren monoäthylenisch ungesättigten Verbindung, die sich von Bestandteil (b) dadurch unterscheidet, daß sie eine -CO-Gruppe und eine $-NH_2-$, -NH- und/oder -OH-Gruppe aufweist;
   (d) Polyvinylacetat, um die Haftung der Beschichtung zu verbessern;
   (e) 0,2 bis 5 Gewichtsteile zumindest eines Zinksalzes einer Fettsäure mit zumindest 10 C-Atomen;
   (f) 0,01 bis 1,0 Gewichtsteile zumindest eines Beschleunigers für einen Peroxidinitiator;
   (g) 5 bis 15 Gewichtsteile leitenden Rußes,
   (h) 50 bis 155 Gewichtsteile eines Füllstoffs, der sich von Bestandteil (g) unterscheidet;
   (i) 0,2 bis 5 Gewichtsteile zumindest eines Kalziumsalzes einer Fettsäure mit zumindest 10 C-Atomen; und
   (j) als Additiv 0,1 bis 1,5 Gewichtsteile eines löslichen ionischen organischen Salzes der allgemeinen Formel:

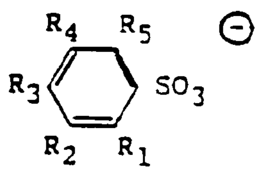

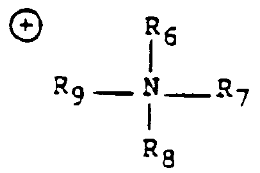

   worin $R_1$ bis $R_5$ ausgewählt sind aus Wasserstoffatomen, Methyl-, Äthyl- und Propylresten, wobei Methyl bevorzugt wird, und worin $R_6$ bis $R_9$ Wasserstoffatome oder Alkylreste mit 1 bis 8 C-Atomen sind, die untereinander gleich oder voneinander verschieden sein können, und worin vorgezogen wird, daß alle $R_6$- bis $R_9$-Reste Wasserstoffatome oder Methyl- oder Äthylreste sind.

2. Zusammensetzung nach Anspruch 1, die zusätzlich zumindest einen organischen Freiradikal-Peroxidinitiator in einer Menge von bis zu etwa 5 Gew.-%, bezogen auf das Gewicht der polymerisierbaren äthylenisch ungesättigten Materialien, enthält.

3. Zusammensetzung nach Anspruch 1 oder 2, worin (h) Talk umfaßt.

4. Zusammensetzung nach einem der Ansprüche 1 bis 3, bei der
   (a) ein Diacrylatester eines flüssigen Bisphenol A-Epoxyharzes ist,
   (b) Styrol ist,
   (c) Hydroxypropylmethacrylat ist,
   (e) Zinkstearat ist,
   (f) Kobaltoktoat ist, und
   (i) Kalziumstearat ist.

5. Inmould-Beschichtungszusammensetzung, die zu einer wärmehärtenden elektrisch leitenden Beschichtung aushärtbar ist und einen Acrylatoligomerbestandteil auf Epoxybasis;
einen äthylenisch ungesättigten Monomerbestandteil zum Vernetzen des Oligomerbestandteils unter Freiradikalinitiierung;
Polyvinylacetat;

einen Füllstoff und
leitenden Ruß enthält,
dadurch gekennzeichnet, daß sie ein lösliches ionisches organisches Salz enthält, das ein Ammoniumarylsulfonat und wirksam ist, um die Leitfähigkeit in der Beschichtung gegenüber jener zu erhöhen, die vom leitenden Ruß verliehen wird.

6. Zusammensetzung nach einem der Ansprüche 1 bis 5, bei der das organische Salz tetra-Alkylammonium-p-toluolsulfonat ist.

7. Zusammensetzung nach Anspruch 6, bei der das organische Salz Tetraäthyl- oder Tetramethylammonium-p-toluolsulfonat ist.

8. Verfahren, welches die Inmouldbeschichtung einer geformten wärmegehärteten Polyesterharz- oder einer wärmegehärteten Vinylesterharzzusammensetzung, die 10 bis 75 Gew.-% Glasfasern enthält, mit einer wärmehärtenden Inmouldbeschichtungszusammensetzung umfaßt, die unter Druck aushärtet, bei einer Temperatur und für einen Zeitraum, die ausreichen, um zu bewirken, daß die genannte Inmouldbeschichtungszusammensetzung eine haftende wärmegehärtete Beschichtung auf der genannten Zusammensetzung bildet, wobei die genannte Inmouldbeschichtungszusammensetzung eine Zusammensetzung nach einem der Ansprüche 1 bis 7 ist und Freiradikalinitiator enthält.

9. Verfahren nach Anspruch 8, das weiters elektrostatisches Spritzlackieren der beschichteten Kunstharzzusammensetzung umfaßt.

10. Laminat, das eine haftende Beschichtung umfaßt, die im Inmouldverfahren auf eine geformte wärmegehärtete Polyesterharz- oder wärmegehärtete Vinylesterharzzusammensetzung aufgetragen wurde, die 10 bis 75 Gew.-% Glasfasern enthält, wobei die genannte Inmouldbeschichtung das Reaktionsprodukt einer Zusammensetzung nach einem der Ansprüche 1 bis 7 umfaßt.

**Patentansprüche für folgenden Vertragsstaat : ES**

1. Verfahren zur Herstellung einer Zusammensetzung für eine wärmehärtende Beschichtung, umfassend das Mischen von:
(a) 100 Gewichtsteilen zumindest eines polymerisierbaren Oligomers auf Epoxybasis mit zumindest zwei Acrylatgruppen und einem durchschnittlichen Molekulargewicht von 500 bis 1.500,
(b) einem äthylenisch ungesättigten Monomer zum Copolymerisieren mit und Vernetzen von Bestandteil (a);
(c) 20 bis 50 Gewichtsteilen zumindest einer copolymerisierbaren monoäthylenisch ungesättigten Verbindung, die sich von Bestandteil (b) dadurch unterscheidet, daß sie eine -CO-Gruppe und eine $-NH_2$-, -NH- und/oder -OH-Gruppe aufweist;
(d) Polyvinylacetat, um die Haftung der Beschichtung zu verbessern;
(e) 0,2 bis 5 Gewichtsteilen zumindest eines Zinksalzes einer Fettsäure mit zumindest 10 C-Atomen;
(f) 0,01 bis 1,0 Gewichtsteilen zumindest eines Beschleunigers für einen Peroxidinitiator;
(g) 5 bis 15 Gewichtsteilen leitenden Rußes,
(h) 50 bis 155 Gewichtsteilen eines Füllstoffs, der sich von Bestandteil (g) unterscheidet;
(i) von 0,2 bis 5 Gewichtsteilen zumindest eines Kalziumsalzes einer Fettsäure mit zumindest 10 C-Atomen; und
(j) als Additiv 0,1 bis 1,5 Gewichtsteilen eines löslichen ionischen organischen Salzes der allgemeinen Formel:

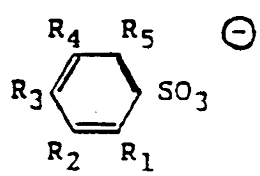

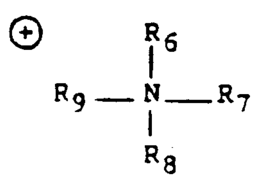

worin $R_1$ bis $R_5$ ausgewählt sind aus Wasserstoffatomen, Methyl-, Äthyl- und Propylresten, wobei Methyl bevorzugt wird, und worin $R_6$ bis $R_9$ Wasserstoffatome oder Alkylreste mit 1 bis 8 C-Atomen sind,

die untereinander gleich oder voneinander verschieden sein können, und worin vorgezogen wird, daß alle $R_6$- bis $R_9$-Reste Wasserstoffatome oder Methyl- oder Äthylreste sind.

2. Verfahren nach Anspruch 1, das zusätzlich das Einarbeiten zumindest eines organischen Freiradikal-Peroxidinitiators in einer Menge von bis zu etwa 5 Gew.-%, bezogen auf das Gewicht der polymerisierbaren äthylenisch ungesättigten Materialien, umfaßt.

3. Verfahren nach Anspruch 1 oder 2, worin (h) Talk umfaßt.

4. Verfahren nach einem der Ansprüche 1 bis 3, bei dem
(a) ein Diacrylatester eines flüssigen Bisphenol A-Epoxyharzes ist,
(b) Styrol ist,
(c) Hydroxypropylmethacrylat ist,
(e) Zinkstearat ist,
(f) Kobaltoktoat ist, und
(i) Kalziumstearat ist.

5. Verfahren zur Herstellung einer Inmould-Beschichtungszusammensetzung, die zu einer wärmehärtenden elektrisch leitenden Beschichtung aushärtbar ist, welches Verfahren das Mischen eines Acrylatoligomerbestandteils auf Epoxybasis;
eines äthylenisch ungesättigten Monomerbestandteils zum Vernetzen des Oligomerbestandteils unter Freiradikalinitiierung;
Polyvinylacetat;
eines Füllstoffs und
leitenden Rußes umfaßt,
dadurch gekennzeichnet, daß ein lösliches ionisches organisches Salz eingearbeitet wird, das ein Ammoniumarylsulfonat und wirksam ist, um die Leitfähigkeit in der Beschichtung gegenüber jener zu erhöhen, die vom leitenden Ruß verliehen wird.

6. Verfahren nach einem der Ansprüche 1 bis 5, bei dem das organische Salz Tetraalkylammonium-p-toluolsulfonat ist.

7. Verfahren nach Anspruch 6, bei dem das organische Salz Tetraäthyl- oder Tetramethylammonium-p-toluolsulfonat ist.

8. Verfahren, welches die Inmouldbeschichtung einer geformten wärmegehärteten Polyesterharz- oder einer wärmegehärteten Vinylesterharzzusammensetzung, die 10 bis 75 Gew.-% Glasfasern enthält, mit einer wärmehärtenden Inmouldbeschichtungszusammensetzung umfaßt, die unter Druck aushärtet, bei einer Temperatur und für einen Zeitraum, die ausreichen, um - zu bewirken, daß die genannte Inmouldbeschichtungszusammensetzung eine haftende wärmegehärtete Beschichtung auf der genannten Zusammensetzung bildet, wobei die genannte Inmouldbeschichtungszusammensetzung nach einem der Ansprüche 1 bis 7 erhältlich ist und Freiradikalinitiator enthält.

9. Verfahren nach Anspruch 8, das weiters elektrostatisches Spritzlackieren der beschichteten Kunstharzzusammensetzung umfaßt.

10. Laminat, das eine haftende Beschichtung umfaßt, die im Inmouldverfahren auf eine geformte wärmegehärtete Polyesterharz- oder wärmegehärtete Vinylesterharzzusammensetzung aufgetragen wurde, die 10 bis 75 Gew.-% Glasfasern enthält, wobei die genannte Inmouldbeschichtung das Reaktionsprodukt einer nach einem der Ansprüche 1 bis 7 erhältlichen Zusammensetzung umfaßt.

## Revendications

## Revendications pour les Etats contractants suivants : BE, CH, DE, FR, GB, IT, LI, LU, NL, SE

1. Composition pour produire une enduction thermodurcissable comprenant
(a) 100 parties en poids d'au moins un oligomère de base époxy polymérisable ayant au moins deux groupes acrylates et un poids moléculaire moyen en poids de 500 à 1 500,

(b) un monomère à insaturation éthylénique pour se copolymériser avec et réticuler le composant (a) ;
(c) 20 à 50 parties en poids d'au moins un composé à insaturation monoéthylénique copolymérisable,différent du composant (b) par le fait qu'il a un groupe -CO- et un groupe $-NH_2$, -NH- et/ou -OH,
(d) de l'acétate de polyvinyle pour améliorer l'adhérence de l'enduction,
(e) 0,2 à 5 parties en poids d'au moins un sel de zinc d'un acide gras ayant au moins 10 atomes de carbone,
(f) 0,01 à 1,0 partie en poids d'au moins un accélérateur d'un initiateur de peroxyde,
(g) 5 à 15 parties en poids de noir de carbone conducteur,
(h) 50 à 155 parties en poids d'une charge différente du composé (g) ;
(i) 0,2 à 5 parties en poids d'au moins un sel de calcium d'un acide gras ayant au moins 10 atomes de carbone et
(j) comme additif, 0,1 à 5 parties en poids d'un sel organique ionique soluble qui a pour formule générale :

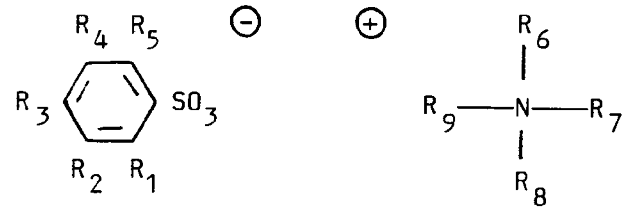

où $R_1$ à $R_5$ sont choisis parmi des atomes d'hydrogène, des radicaux méthyle, éthyle et propyle, en préférant méthyle, et où $R_5$ à $R_9$ sont des atomes d'hydrogène et des radicaux alkyle de 1 à 8 atomes de carbone qui peuvent être identiques ou différents et où il est préférable que tous les radicaux $R_5$ à $R_9$ soient des atomes d'hydrogène ou des radicaux éthyle ou méthyle.

2. Composition selon la revendication 1, contenant de plus au moins un initiateur de peroxyde de radicaux libres organiques en une quantité pouvant atteindre environ 5% en poids en se basant sur le poids des matières à insaturation éthylénique polymérisables.

3. Composition selon la revendication 1 ou la revendication 2, où (h) comprend du talc.

4. Composition selon l'une quelconque des revendications 1 à 3, où
(a) est un ester de diacrylate d'une résine époxy de Bisphénol A,
(b) est styrène,
(c) est hydroxypropyl méthacrylate,
(e) est du stéarate de zinc,
(f) est de l'octoate de cobalt et
(i) est du stéarate de calcium.

5. Composition d'enduction dans le moule,durcissable en une enduction électriquement conductrice et thermodurcissable et comprenant
un composant d'oligomère d'acrylate de base époxy ;
un composant d'un monomère à insaturation éthylénique pour une réticulation du composant d'oligomère avec initiation de radicaux libres ;
de l'acétate de polyvinyle ;
une charge et
du noir de carbone conducteur
caractérisée en ce qu'elle contient un sel organique ionique soluble qui est un arylsulfonate d'ammonium, efficace pour augmenter la conductivité dans l'enduction relativement à celle conférée par le noir de carbone conducteur.

6. Composition selon l'une quelconque des revendications 1 à 5, où le sel organique est le p-toluènesulfonate de tétraalkyl ammonium.

7. Composition selon la revendication 6, où le sel organique est le p-toluènesulfonate de tétraéthyl ou tétraméthyl ammonium.

8. Méthode qui comprend l'enduction dans le moule d'une résine moulée et thermodurcie de polyester ou d'une composition d'une résine d'ester vinylique thermodurcie contenant 10 à 75% en poids de fibres de verre avec une composition d'enduction dans le moule, thermodurcissable, durcissant sous pression à une température et pendant un temps suffisants pour forcer la composition d'enduction dans le moule à former une enduction thermodurcie adhérente sur ladite composition, ladite composition d'enduction dans le moule étant selon l'une quelconque des revendications 1 à 7 et comprenant un initiateur de radicaux libres.

9. Méthode selon la revendication 8, comprenant de plus une peinture au pistolet électrostatique de la composition de résine enduite.

10. Stratifié comprenant une enduction adhérant dans le moule enduite sur une résine de polyester thermodurcie moulée ou une composition de résine d'ester vinylique thermodurcie contenant 10 à 75% en poids de fibres de verre, ladite enduction dans le moule comprenant le produit réactionnel d'une composition selon l'une quelconque des revendications 1 à 7.

**Revendications pour l'Etat contractant suivant : ES**

1. Composition pour produire une enduction thermodurcissable comprenant
   (a) 100 parties en poids d'au moins un oligomère de base époxy polymérisable ayant au moins deux groupes acrylates et un poids moléculaire moyen en poids de 500 à 1 500,
   (b) un monomère à insaturation éthylénique pour se copolymériser avec et réticuler le composant (a)
   (c) 20 à 50 parties en poids d'au moins un composé à insaturation monoéthylénique copolymérisable,différent du composant (b) par le fait qu'il a un groupe -CO- et un groupe $-NH_2$, -NH- et/ou -OH,
   (d) de l'acétate de polyvinyle pour améliorer l'adhérence de l'enduction,
   (e) 0,2 à 5 parties en poids d'au moins un sel de zinc d'un acide gras ayant au moins 10 atomes de carbone,
   (f) 0,01 à 1,0 partie en poids d'au moins un accélérateur d'un initiateur de peroxyde,
   (g) 5 à 15 parties en poids de noir de carbone conducteur,
   (h) 50 à 155 parties en poids d'une charge différente du composé (g) ;
   (i) 0,2 à 5 parties en poids d'au moins un sel de calcium d'un acide gras ayant au moins 10 atomes de carbone et
   (j) comme additif, 0,1 à 5 parties en poids d'un sel organique ionique soluble qui a pour formule générale :

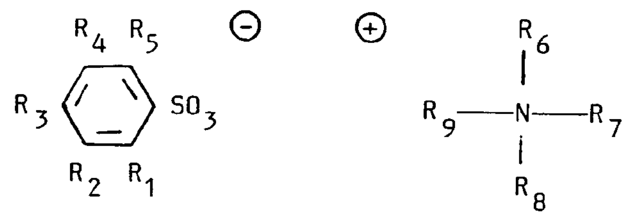

   où $R_1$ à $R_5$ sont choisis parmi des atomes d'hydrogène, des radicaux méthyle, éthyle et propyle, en préférant méthyle, et où $R_5$ à $R_9$ sont des atomes d'hydrogène et des radicaux alkyle de 1 à 8 atomes de carbone qui peuvent être identiques ou différents et où il est préférable que tous les radicaux $R_5$ à $R_9$ soient des atomes d'hydrogène ou des radicaux éthyle ou méthyle.

2. Composition selon la revendication 1, contenant de plus au moins un initiateur de peroxyde de radicaux libres organiques en une quantité pouvant atteindre environ 5% en poids en se basant sur le poids des matières à insaturation éthylénique polymérisables.

3. Composition selon la revendication 1 ou la revendication 2, où (h) comprend du talc.

4. Composition selon l'une quelconque des revendications 1 à 3, où
   (a) est un ester de diacrylate d'une résine époxy de Bisphénol A,
   (b) est styrène,

(c) est hydroxypropyl méthacrylate,
(e) est du stéarate de zinc,
(f) est de l'octoate de cobalt et
(i) est du stéarate de calcium.

**5.** Composition d'enduction dans le moule, durcissable en une enduction électriquement conductrice et thermodurcissable et comprenant
un composant d'oligomère d'acrylate de base époxy ;
un composant d'un monomère à insaturation éthylénique pour une réticulation du composant d'oligomère avec initiation de radicaux libres ;
de l'acétate de polyvinyle ;
une charge et
du noir de carbone conducteur
caractérisée en ce qu'elle contient un sel organique ionique soluble qui est un arylsulfonate d'ammonium, efficace pour augmenter la conductivité dans l'enduction relativement à celle conférée par le noir de carbone conducteur.

**6.** Composition selon l'une quelconque des revendications 1 à 5, où le sel organique est le p-toluènesulfonate de tétraalkyl ammonium.

**7.** Composition selon la revendication 6, où le sel organique est le p-toluènesulfonate de tétraéthyl ou tétraméthyl ammonium.

**8.** Méthode qui comprend l'enduction dans le moule d'une résine moulée et thermodurcie de polyester ou d'une composition d'une résine d'ester vinylique thermodurcie contenant 10 à 75% en poids de fibres de verre avec une composition d'enduction dans le moule, thermodurcissable, durcissant sous pression à une température et pendant un temps suffisants pour forcer la composition d'enduction dans le moule à former une enduction thermodurcie adhérente sur ladite composition, ladite composition d'enduction dans le moule étant selon l'une quelconque des revendications 1 à 7 et comprenant un initiateur de radicaux libres.

**9.** Méthode selon la revendication 8, comprenant de plus une peinture au pistolet électrostatique de la composition de résine enduite.

**10.** Stratifié comprenant une enduction adhérant dans le moule enduite sur une résine de polyester thermodurcie moulée ou une composition de résine d'ester vinylique thermodurcie contenant 10 à 75% en poids de fibres de verre, ladite enduction dans le moule comprenant le produit réactionnel d'une composition selon l'une quelconque.des revendications 1 à 7.